# EUROPÄISCHE PATENTSCHRIFT

(11) **EP 2 035 772 B1**
(45) Veröffentlichungstag und Bekanntmachung des Hinweises auf die Patenterteilung: **03.04.2013**
(21) Anmeldenummer: 07764740.2
(22) Anmeldetag: 20.06.2007
(51) Int. Cl.: G01B 17/00, G01L 5/04, B65H 23/04

(54) **VERFAHREN ZUR BESTIMMUNG DER ZUGSPANNUNGSVERTEILUNG ÜBER DIE BANDBREITE EINES BANDES**
METHOD FOR DETERMINING THE TENSILE STRESS DISTRIBUTION ON THE WIDTH OF A STRIP
PROCÉDÉ POUR DÉTERMINER LA RÉPARTITION DES CONTRAINTES DE TRACTION SUR LA LARGEUR D'UNE BANDE

(30) Priorität: 22.06.2006 DE 102006029139
(43) Veröffentlichungstag der Anmeldung: 18.03.2009
(73) Patentinhaber: Betriebsforschungsinstitut VDEh Institut für angewandte Forschung GmbH, 40237 Düsseldorf (DE); Muecke, Gert, 40724 Hilden (DE); Luhn, Ernst, 42781 Haan (DE); Boehlke, Sven, 40591 Düsseldorf (DE)
(72) Erfinder: MUECKE, Gert, 40724 Hilden (DE); LUHN, Ernst, 42781 Haan (DE); BOEHLKE, Sven, 40591 Düsseldorf (DE)
(74) Vertreter: Tilmann, Max Wilhelm
(86) Internationale Anmeldenummer: PCT/EP2007/005417
(87) Internationale Veröffentlichungsnummer: WO 2007/147572

(56) Entgegenhaltungen:
- EP-A- 1 562 043
- EP-A1- 0 595 072
- DE-A1- 19 839 286
- JP-A- 58 166 206
- US-A- 2 674 151
- US-A- 4 475 815

## Beschreibung

Die Erfindung betrifft ein Meßverfahren zur Bestimmung der Zugspannungsverteilung über die Bandbreite eines Bandes.

Aus DE 34 42 154 C2 ist ein Verfahren zur Positionserfassung der Bandkante einer Materialbahn mittels eines im Bandkantenbereich angeordneten, aus einem Sender und einem Empfänger bestehenden Ultraschall-Detektors bekannt. Dort wird beschrieben, daß bei einem zwischen zwei nicht dargestellten Rollen frei geführten Band oberhalb des Bands ein Sender und unterhalb des Bands ein Empfänger angeordnet werden kann. Sender und Empfänger sind im Kantenbereich des Bands angeordnet, so daß der Schallstrahl teilweise von der Materialbahn abgedeckt wird. Je nach dem Abdeckungsgrad gelangt mehr oder weniger Schallenergie in den Empfänger, die ein Maß für die Lage der Bandkante bzw. des Bands repräsentiert. Zur Vermeidung von Verfälschungen der Meßergebnisse, die durch eine Verstärkung oder Schwächung des Meßstrahls auftreten, wenn auch an anderer Stelle reflektierte Strahlen zusätzlich in den Empfänger eintreten, schlägt DE 34 42 154 ein dort näher beschriebenes, spezielles Auswerteverfahren für die von dem Empfänger aufgenommenen Wellen vor. Im Kern beruht dieses Verfahren darauf, das von dem Empfänger empfangene Signal nur für ein enges, bestimmtes Zeitfenster zu betrachten und Wellen, die außerhalb dieses Zeitfensters vom Empfänger empfangen werden, unberücksichtigt zu lassen. Auf diese Weise wird sichergestellt, daß während der Abtastperiode das Meßsignal erfaßt wird und keine störenden Reflektionen, die zu einem späteren Zeitpunkt eintreffen. Das Zeitfenster ist eng an die Laufzeit der Welle vom Sender zum Empfänger gekoppelt. Nachteilig an dem hier beschriebenen Verfahren ist, daß bei dem anstelle des vorbeschriebenen Durchstrahlverfahrens auch anwendbaren Reflektionsverfahren die Laufzeit der Welle vom Sender zum Empfänger von der Position der Materialbahn abhängt. Bei einer schwingenden Materialbahn ändert sich dieser Abstand ständig. DE 34 42 154 C2 sieht vor, das Betrachtungsfenster konstant zu halten. Damit ergeben sich bei schwingender Materialbahn und der Durchführung des Reflexionsverfahrens starke Meßfehler. Frei zwischen zwei Rollen geführte Metallbänder können mit Amplituden von bis zu 50 bis 100 mm schwingen.

Aus DE 198 39 286 B4 ist ein Verfahren bekannt, bei dem das Metallband zur Messung der Zugspannungsverteilung durch Unterdruck ausgelenkt und die Auslenkung des Metallbands mittels wenigstens zweier über die Breite des Metallbands angeordneter Sensoren gemessen wird. Die Meßwerte von Sensoren im Randbereich des Metallbands, deren Meßbereich unvollständig durch das Metallband abgedeckt ist, werden korrigiert. Das Metallband wird periodisch ausgelenkt und die Zugspannungsverteilung aus der Amplitude der von den Sensoren gelieferten Meßwerten bestimmt. Die Sensoren sind als Wirbelstromsensoren, kapazitive Abstandssensoren, optische Abstandssensoren oder Ultraschallabstandssensoren ausgebildet. Gemäß DE 198 39 286 B4 werden zur Bestimmung der Bandkante 10 Meßpunkte benötigt, also die Meßergebnisse von 10 Sensoren ermittelt werden. Diese Meßpunkte werden mit mathematischen Methoden zu einer Fitfunktion, also einer Verlaufsfunktion, gefittet. Aus dieser zunächst zu ermittelnden Funktion kann dann auf Grundlage einer Sensorspannung die Bandkantenposition berechnet werden.

DE 198 39 286 B4 verwendet zur Bestimmung der Zugspannung die Amplitude der Auslenkung des Metallbands. Damit das Metallband entsprechend ausgelenkt werden kann, muß ein hinreichend großer Freiraum zwischen zwei Rollen gelassen werden, auf denen das Band aufliegt, so daß das Band zwischen diesen beiden Rollen in Schwingung versetzt werden kann. Diese große Baulänge ist ein entscheidender Nachteil des aus DE 198 39 286 B4 bekannten Verfahrens.

US 4 475 815 A offenbart ein Verfahren und eine Meßvorrichtung zur Vermessung eines Saumgummiabschnitts eines mit Gummi beschichteten bandförmigen Mantelmaterials für Autoreifen, das Verstärkungsabschnitte aufweist. Es wird die Vermessung der Breite oder Ausdehnung des Saumgummiabschnitts, der sich vom Rand des Mantelmaterials zu einem ersten Verstärkungsabschnitt erstreckt, beschrieben. Das bandförmige Mantelmaterial wird in einer Behandlungsanlage über eine Umlenkrolle geführt. Die Behandlungsanlage weist einen Wellensender und einen Wellenempfänger auf. Der Wellensender ist so ausgerichtet, dass in seinem Wellenausbreitungswinkel ausgesendete Wellen auf die Umfangsfläche der Umlenkrolle treffen, und zwar in dem Bereich der Umfangsfläche der Umlenkrolle, in der der Saumgummiabschnitt des von der Umlenkrolle umgelenkten Mantelmaterials auf der Umfangsfläche aufliegt.

EP 1 562 043 A1 offenbart ein Verfahren und eine Meßvorrichtung zur Bestimmung einer Kantenlage eines Gewebe- oder Faserbandes in einer Anlage, in der das Band behandelt wird. Die Anlage umfasst eine Umlenkrolle und einen Wellensender sowie einen Wellenempfänger. Der Wellensender ist so ausgerichtet, dass sich zumindest ein Teil der in seinem Wellenausbreitungswinkel ausgesendeten Wellen in einem Bereich, in der die Bandkante des Bandes liegt, parallel zur Umfangsfläche der Umlenkrolle und in einem Abstand zur Umlenkrolle ausbreiten.

EP 0 595 072 A1 offenbart eine Umlenkmessrolle für die Ermittlung der Spannungsverteilung beim Walzen eines dünnen Bands, bei der mittels eines Kraftmessgebers eine auf die Umlenkmessrolle von dem Band wirkende Umlenkkraft bestimmbar ist.

Vor diesem Hintergrund liegt der Erfindung die Aufgabe zugrunde, die Zugspannungsverteilung über die Bandbreite eines Bandes präziser und mit geringerem Aufwand zu erfassen.

Diese Aufgabe wird durch das Verfahren gemäß Anspruch 1 gelöst.

Die Erfindung sieht vor, die Bandkantenlage, bzw. die Bandbreite mittels eines Reflektionsverfahrens zu ermitteln, dabei aber sicherzustellen, daß das Band in dem Bereich, in dem die Wellen zur Ermittlung der Bandkante auf das Band treffen, nicht schwingt und/oder daß es in seiner vollen Breite ausgestreckt ist. Dies wird erfindungsgemäß dadurch erreicht, daß die Bandkantenlage, bzw. die Bandbreite auf der Umlenkrolle ermittelt wird. Dafür ist der Wellensender so ausgerichtet, daß in seinem Wellenausbreitungswinkel ausgesandte Wellen entweder auf die Umfangsfläche der Umlenkrolle treffen, und zwar in dem Bereich der Umfangsfläche der Umlenkrolle, in der die Bandkante des von der Umlenkrolle umgelenkten Bands auf der Umfangsfläche aufliegt. Oder der Wellensender ist so ausgerichtet, daß sich zumindest ein Teil der in seinem Wellenausbreitungswinkel ausgesendeten Wellen in dem Bereich der Umfangsfläche der Umlenkrolle, in der die Bandkante des von der Umlenkrolle umgelenkten Bands auf der Umfangsfläche aufliegt, parallel zur Umfangsfläche der Umlenkrolle und in einem Abstand zur Umlenkrolle, der maximal der Banddicke entspricht, ausbreitet.

Bei dem erfindungsgemäßen Meßverfahren zur Bestimmung der Zugspannungsverteilung über die Bandbreite eines Bandes wird ein Band über die Umlenkrolle der Meßvorrichtung geführt. Die beim Umlenken des Bandes um die Umlenkrolle in Radialrichtung der Umlenkrolle wirkenden Kräfte werden durch mehrere Sensoren gemessen, die in Längsrichtung der Umlenkrolle versetzt zueinander angeordnet sind. Die Lage der Bandkante in Längsrichtung der Umlenkrolle wird aus dem von dem Wellenempfänger aufgenommenen Echo der von dem Wellensender ausgestrahlten Wellen ermittelt. Aus der so ermittelten Lage der Bandkante wird bestimmt, ob ein Sensor in Längsrichtung der Umlenkrolle gesehen nur teilweise durch das Band überdeckt ist. Der von einem nur teilweise überdeckten Sensor ermittelte Meßwert wird korrigiert.

Auf diese Weise können auch die Meßwerte der Sensoren im Bandkantenbereich für die Bestimmung der Zugspannungsverteilung verwendet werden. Dadurch kann vermieden werden, daß wie bisher ohne genaue Kenntnis dieser Teilüberdeckung die Meßwerte der Randzone bei der Bestimmung der Zugspannungsverteilung nicht berücksichtigt werden. Diese Vorgehensweise hat in der Vergangenheit dazu geführt, daß zum Beispiel in Fällen von extrem kurzen Bandkanten und somit großer örtlicher Längsspannung die Bandkantenbereiche unzureichend oder falsch bewertet wurden. Als Folge konnten Bandreißer auftreten, die häufig zu erheblichen Betriebstörungen und auch Schäden an der Anlage geführt haben. Die erfindungsgemäße Meßmethode erlaubt es nun, die Zugspannungsverteilung im Bereich der Bandkante präzise zu bestimmen.

Aufgrund der ermittelten Lage der Bandkante wird das Maß der Überdeckung des Sensors ermittelt und die Korrektur des Meßwerts in Abhängigkeit dieses Maß der Überdeckung durchgeführt.

Die Erfindung wird nachfolgend mit allgemeinem Bezug auf Wellen erläutert, weil davon auszugehen ist, daß das erfindungsgemäße Verfahren mit verschiedensten Arten von Wellen, die einen Reflexionsverfahren zugänglich sind, durchgeführt werden kann. Es ist zu erwarten, daß besonders gute Ergebnisse beim Einsatz von Ultraschallwellen erreicht werden, die auch gemäß einer bevorzugten Ausführungsform eingesetzt werden sollen. Allerdings können beispielsweise auch elektromagnetische Wellen eingesetzt werden.

Als Bereich der Umfangsfläche der Umlenkrolle, in der die Bandkante des von der Umlenkrolle umgelenkten Bandes auf der Umfangsfläche aufliegt, wird erfindungsgemäß ein Bereich mit einer Ausdehnung verstanden, der durch die Breite des schmalsten Bandes begrenzt wird, für die die Bandbehandlungsanlage ausgelegt ist. In Längsrichtung der Umlenkrolle gesehen kann die Grenze des Bereichs zur Bandmitte hin nur soweit liegen, wie die gegenüberliegende Bandkante nicht gegen den einen Lagerbock der Umlenkrolle stößt. Auf der anderen Seite ist der Bereich durch den dort vorgesehenen Lagerbock der Umlenkrolle beschränkt. Das erfindungsgemäße Ergebnis wird erreicht, wenn der Wellensender derart ausgerichtet ist, daß zumindest ein Teil der in seinem Wellenausbreitungswinkel ausgesandten Wellen in diesem Bereich auf die Umfangsfläche der Umlenkrolle trifft. Insbesondere bevorzugt treffen über 50%, ganz besonders bevorzugt über 60% und noch mehr bevorzugt über 70% der im Wellenausbreitungswinkel ausgesandten Wellen in diesem Bereich auf die Umfangsfläche der Umlenkrolle.

Vorzugsweise decken die auf die Umfangsfläche der Umlenkrolle treffenden Wellen im Wellenausbreitungswinkel des Wellensenders zumindest diesen gesamten Bereich ab. Besonders bevorzugt ist der Wellensender jedoch so ausgerichtet, daß die Wellen im wesentlichen nur in einem Unterbereich dieses Bereichs auf die Umfangsfläche treffen, beispielsweise in der Art, daß der Wellenausbreitungswinkel auf einen Unterbereich fokussiert ist oder daß der Wellensender derart ausgerichtet ist, daß der Wellenausbreitungswinkel nur einen Teil des Bereichs, dann aber auch einen sich daran anschließenden Bereich abdeckt, beispielsweise den Bereich nicht schon ab dem die eine Grenze definierenden Lagerbock abdeckt, sondern erst ab einem in Längsrichtung der Umlenkrolle weiter einwärts liegenden Punkt abdeckt, beispielsweise ab der Rollenkante der Umlenkrolle oder beispielsweise ab einem Punkt, der 25mm oder beispielsweise auch weniger oder mehr von der Rollenkante der Umlenkrolle einwärts liegt (bei einem Umlenkrollendurchmesser von 300 mm). Der Unterbereich hat in Längsrichtung der Umlenkrolle vorzugsweise die Ausdehnung des Bereichs, in der sich die Bandkante erfahrungsgemäß befindet. Insbesondere bevorzugt hat dieser Bereich beispielsweise bei einem Band mit einer Breite von 2 m eine Ausdehnung in Längsrichtung der Umlenkrolle von beispielsweise 500 mm.

Befindet sich die Bandkante in diesem Bereich, bzw. in diesem Unterbereich, so reflektiert sie Wellen, die auf sie treffen. Diese reflektierten Wellen werden von dem Wellenempfänger empfangen. Aus dem Verlauf des von dem Wellenempfänger empfangenen Signals kann die Lage der Bandkante errechnet werden. Ferner kann die Bandbreite bestimmt werden, wenn beispielsweise auf beiden Seiten des Bandes die Lage der Bandkante nach dem Reflektionsverfahren bestimmt wird. Ebenso ist festgestellt worden, daß bereits aus dem Reflexionssignal eines Wellensenders sowohl die nahliegende als auch die fernliegende Bandkante ermittelt werden kann, da auch die fernliegende Bandkante zu einer identifizierbaren Signalform führt, aus der beispielsweise in Verbindung mit der Laufzeit die Lage der fernliegenden Bandkante ermittelt werden kann.

Es wird beschrieben, einen Wellensender mit einem engen Wellenausbreitungswinkel zu verwenden. Der Wellenausbreitungswinkel ist vorzugsweise so groß, daß alle seine Wellen in dem Bereich der Umfangsfläche der Umlenkrolle, in der die Bandkante des von der Umlenkrolle umgelenkten Bands auf der Umfangsfläche aufliegt, auf die Umfangsfläche der Umlenkrolle treffen.

Hierdurch können Streustrahlungen reduziert werden.

Die Lage der Bandkante bzw. die Bandbreite läßt sich auch besonders gut ermitteln, wenn der Wellensender so ausgerichtet ist, daß sich zumindest ein Teil der in seinem Wellenausbreitungswinkel ausgesandte Wellen in dem Bereich der Umfangsfläche der Umlenkrolle, in der die Bandkante des von der Umlenkrolle umgelenkten Bands auf der Umfangsfläche aufliegt, parallel zur Umfangsfläche der Umlenkrolle, bzw. einer Tangentialebene, die an der Umfangsfläche der Umlenkrolle anliegt und in einem Abstand, der maximal der Banddicke entspricht, ausbreitet. Diese so ausgesandten Wellen, die auch nur ein Teil des von dem Wellensender ausgesandten Wellenausbreitungswinkel ausmachen können, breiten sich parallel zur Umfangsfläche der Umlenkrolle, bzw. der Tangentialebene, vorzugsweise in Richtung der Längsachse der Umlenkrolle, aus und treffen auf die Bandkante. Dort werden sie reflektiert. Der Wellenempfänger nimmt die reflektierten Wellen auf. Aufgrund der Laufzeit der Wellen kann die Lage der Bandkante des Bandes und damit die Bandkantenlage, bzw. Bandbreite gut ermittelt werden. Es wird zumindest ein Teil der Wellen im Bereich der Banddicke, also maximal mit einem Abstand zur Umlenkrolle, der der Banddicke entspricht, ausgesandt, um sicherzustellen, daß zumindest ein Teil der Wellen auf die Bandkante trifft. Insbesondere bevorzugt ist die Banddicke des Bandes maximal 500 mm. Insbesondere ist der Wellensender so ausgerichtet, daß sich ein so genannter streifender Einfall ergibt, also ein Verstärkungseffekt der sich durch eine Führung der Wellen entlang der Rollenoberfläche ergibt.

Da das Band durch den angelegten Längsbandzug und die Biegung um die Umlenkrolle (Umschlingungswinkel) gezwungen wird, sich über die gesamte Bandbreite nahezu formschlüssig an den Rollenkörper anzulegen, befindet es sich in einer besonderen Ruhelage, in der die Bandkante besonders gut gemessen werden kann und in der sich das Band mit seiner ganzen Bandbreite in einer Ebene befindet, so daß die Bandbreite ohne Einflüsse von Bandverformungen genau bestimmt werden kann. Die erfindungsgemäß durchgeführte Messung kann sowohl durch in einem Winkel kleiner 90° auf die Bandkante treffende Wellen, als auch besonders bevorzugte durch senkrecht auf die Bandkante treffende Wellen erfolgen.

Das erfindungsgemäße Meßverfahren kann insbesondere beim Walzen von Bändern, insbesondere bei Kaltband, verwendet werden. Es kann aber auch im Bereich der nichtmetallischen Bänder, Bahnen und Folien eingesetzt werden.

Die in Längsrichtung der Umlenkrolle versetzt zueinander angeordneten Sensoren sind so angeordnet, daß sie die beim Umlenken des Bandes um die Umlenkrolle in Radialrichtung der Umlenkrolle wirkenden Kräfte messen können. Beispielsweise ist die Umlenkrolle nach Art der in DE 10 207 501 C1, DE 29 44 723 C2, DE 42 36 657 C2 ausgebildet. Auf die darin ausgeführten detaillierten Beschreibung der Umlenkrolle wird ausdrücklich Bezug genommen und die dortige Beschreibung des Aufbaus der Umlenkrolle, insbesondere der Ausgestaltung, Anordnung und Befestigung der Sensoren, als Teil der Beschreibung der erfindungsgemäß eingesetzten Umlenkrolle angesehen.

In einer bevorzugten Ausführungsform ist der Wellensender im Winkel zur Längsachse der Umlenkrolle ausgerichtet, so daß die Mittelachse seines Wellenausbreitungswinkels in einer Ebene verläuft, die auch die Längsachse der Umlenkrolle enthält, wobei die Mittelachse in dieser Ebene in einem Winkel ALPHA zur Längsachse der Umlenkrolle verläuft. Es hat sich gezeigt, daß bereits mit einem derartigen Aufbau gute Meßergebnisse erzielt werden können. Dieser Aufbau bietet den zusätzlichen Vorteil, daß der Wellensender etwas versetzt zur Umlenkrolle angeordnet werden kann und dann schräg von oben oder schräg von der Seite auf den Bereich der Umfangsfläche der Umlenkrolle ausgerichtet wird, in der die Bandkante des von der Umlenkrolle umgelenkten Bandes auf der Umfangsfläche aufliegt. Insbesondere bevorzugt beträgt der Winkel ALPHA maximal 10°. Besonders bevorzugt ist der Wellensender so ausgebildet, daß sich ein sogenannter "streifender Einfall" ergibt.

In einer alternativen Ausführungsform ist der Wellensender derart ausgerichtet, daß die Mittelachse seines Wellenausbreitungswinkels in einer Ebene, die auch die Längsachse der Umlenkrolle enthält, parallel zur Längsachse der Umlenkrolle verläuft. Bei dieser Anordnung trifft die Welle auf die Bandkante. Aus der Reflektion einer solchen Welle an der Bandkante kann die Bandlage besonders präzise ermittelt werden.

In einer Ausführungsform der Erfindung kann der Wellensender derart ausgerichtet sein, daß die Ebene, die die Mittelachse seines Wellenausbreitungswinkels enthält, im Winkel zur Bandlaufrichtung des Bandes ausgerichtet ist. In einer bevorzugten Ausführungsform ist die Ebene, die die Mittelachse des Wellenausbreitungswinkels enthält, senkrecht zur Bandlaufrichtung ausgerichtet. Die Wellen breiten sich also im wesentlichen in Längsrichtung der Umlenkrolle aus.

In einer bevorzugten Ausführungsform der Erfindung ist der Wellensender an dem Lagerbock der Umlenkrolle befestigt. Auf diese Weise kann eine einfache Bauweise erzielt werden. Auf separate Halterungen für den Wellensender kann verzichtet werden. Alternativ kann der Wellensender allerdings auf einer separaten Halterung angeordnet werden, der Lagerbock der Umlenkrolle sich für eine Befestigung eines Wellensenders nicht eignet.

In einer bevorzugten Ausführungsform sind der Wellensender und der Wellenempfänger in eine gemeinsame Sende-Empfangseinheit integriert. Eine Sende-Empfangseinheit kann beispielsweise in einem ersten Zeitfenster Wellen aussenden und in einem zweiten, nachfolgenden Zeitfenster Wellen empfangen. Eine solche gemeinsame Sende-Empfangseinheit führt zu einer weiteren Vereinfachung des konstruktiven Aufbaus.

In einer bevorzugten Ausführungsform ist der Wellensender in einer Entfernung von 10 bis 1.000 mm, insbesondere in einer Entfernung von 100 bis 500 mm zu der zu erfassenden Bandkante angeordnet. Es hat sich gezeigt, daß bei Ultraschallwellen insbesondere beim Einsatz von Betriebsfrequenzen zwischen 100 bis 600 kHz, insbesondere zwischen 200 und 400 kHz, bei einem solchen Abstand zwischen Wellensender und Bandkante nach wie vor gute Meßergebnisse erzielt werden können. Bei dem bevorzugten Schallaufweg parallel zur Bandoberfläche kann sich die Empfindlichkeitserhöhung am stärksten ausbilden. Dann können mit der erfindungsgemäßen Vorrichtung Kanten von Folien mit einer Dicke < 100µm in einer Entfernung von 500 mm erfaßt werden (beispielsweise bei einer Arbeitsfrequenz von 200 kHz).

In einer bevorzugten Ausführungsform berücksichtigt die Auswertung Reflektionssignale vorhandener Reflektoren bekannter Lage oder zusätzlich eingebauter Referenzreflektoren. Dies ermöglicht beispielsweise die Bestimmung der Bändkantenlage mit einer Auflösung von ≤±0,5 mm auch unter dem beim Walzen von Kaltwalzbändem üblichen Temperaturschwankungen und Luftbewegungen.

Insbesondere bei Ultraschallwellen und einer Betriebsfrequenz von 200 kHz ist die Dämpfung auf dem Schallaufweg noch nicht so groß, daß sie die Kantenerkennung nennenswert beeinträchtigt. Störechos aus der betrieblichen Umgebung, die allgemein aus größerer Entfernung stammen, unterliegen bei dieser Arbeitsfrequenz bereits erheblicher Dämpfung. Störechos aus der näheren Umgebung der Meßstrecke, die gegebenenfalls in der Auswertung berücksichtigt werden müssen, klingen schnellstmöglichst ab.

Nachstehend wird anhand einer lediglich ein Ausführungsbeispiel darstellenden Zeichnung die Erfindung näher erläutert. Darin zeigt:
- Fig. 1: den Aufbau einer Meßvorrichtung in einer schematischen, teilweisen Seitenansicht in Bandlaufrichtung, mit der das erfindungsgemäße Verfahren durchführbar ist,
- Fig. 2: eine Seitenansicht der bei der Meßvorrichtung gemäß Fig. 1 einsetzbaren Meßrolle in einer schematischen Seitenansicht und
- Fig. 3: den Aufbau einer weiteren Meßvorrichtung in einer schematischen, teilweisen Seitenansicht in Bandlaufrichtung, mit der das erfindungsgemäße Verfahren durchführbar ist.

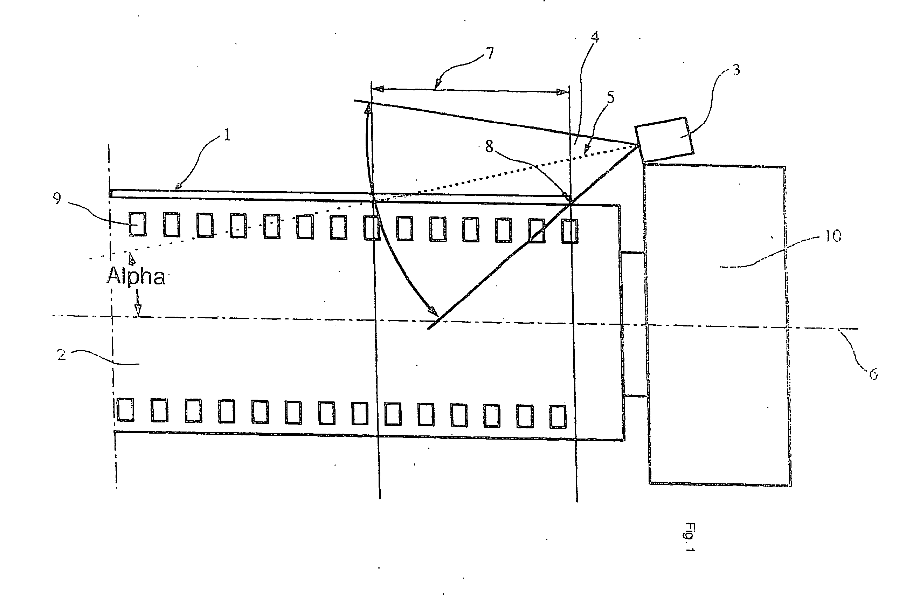

Die in Fig. 1 dargestellte Meßvorrichtung zur Bestimmung der Bandkantenlage und der Zugspannungsverteilung über die Bandbreite eines Bandes 1 weist eine Umlenkrolle 2 auf. In einer als gemeinsame Sende-Empfangseinheit 3 ausgebildeten Vorrichtung sind ein Ultraschallwellensender und ein Ultraschallwellenempfänger angeordnet. Der Wellensender weist einen Wellenausbreitungswinkel 4 auf. Dieser Wellenausbreitungswinkel hat eine Mittelachse 5. Der Wellensender ist derart ausgerichtet, daß die Mittelachse 5 des Wellenausbreitungswinkels 4 in einer Ebene, die auch die Längsachse 6 der Umlenkrolle 2 enthält, im Winkel ALPHA zur Längsachse verläuft.

Der Wellensender ist so ausgerichtet, daß in seinem Wellenausbreitungswinkel 4 ausgesendete Wellen auf die Umfangsfläche der Umlenkrolle 2 treffen, und zwar in dem Unterbereich 7 der Umfangsfläche der Umlenkrolle 2, in der die Bandkante 8 des von der Umlenkrolle 2 umgelenkten Bands 1 erfahrungsgemäß auf der Umfangsfläche aufliegt.

Die Umlenkrolle 2 weist Sensoren 9 auf, die die beim Umlenken des Bands 1 um die Umlenkrolle 2 in Radialrichtung der Umlenkrolle 2 wirkenden Kräfte messen können.

Der in der gemeinsamen Sende-Empfangseinheit 3 angeordnete Wellensender ist mit der gemeinsamen Sende-Empfangseinheit 3 an dem Lagerbock 10 der Umlenkrolle 2 befestigt.

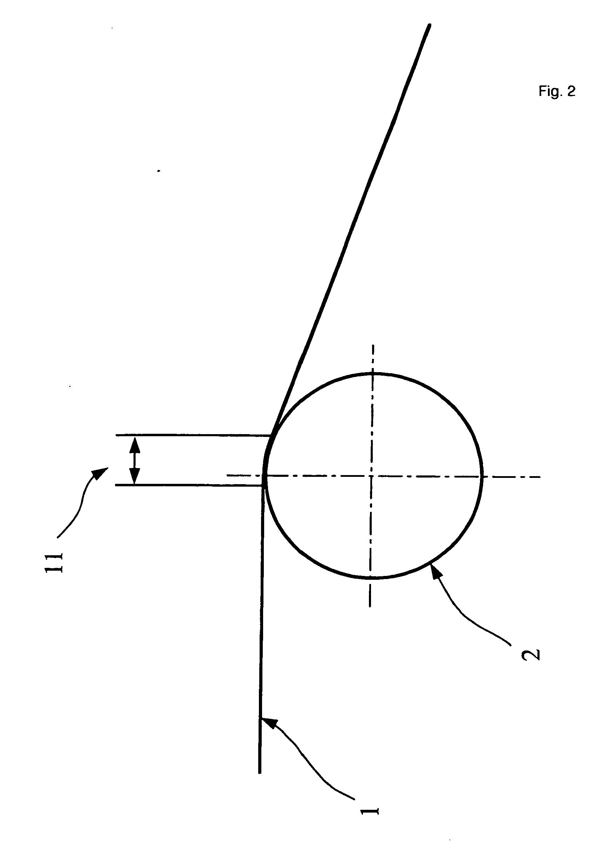

Die von dem Wellensender ausgesandten Wellen erfassen zumindest zum Teil die Stirnseite des Bandes und erzeugen dort ein Rückecho, das von dem Wellenempfänger aufgenommen wird. Durch den angelegten Längsbandzug und die Biegung um die Umlenkrolle 2 wird das Band 1 gezwungen, sich über die gesamte Bandbreite nahezu formschlüssig an den Rollenkörper anzulegen (vgl. Fig. 2).

Fig. 2 zeigt, daß diese "formschlüssige" Anlage in einem Auflagebereich 11 erfolgt. Der Wellenausbreitungswinkel der vom Wellensender ausgesendeten Wellen ist erfindungsgemäß derart ausgerichtet, daß die Wellen in diesem Bereich 11 auf die Bandkante treffen.

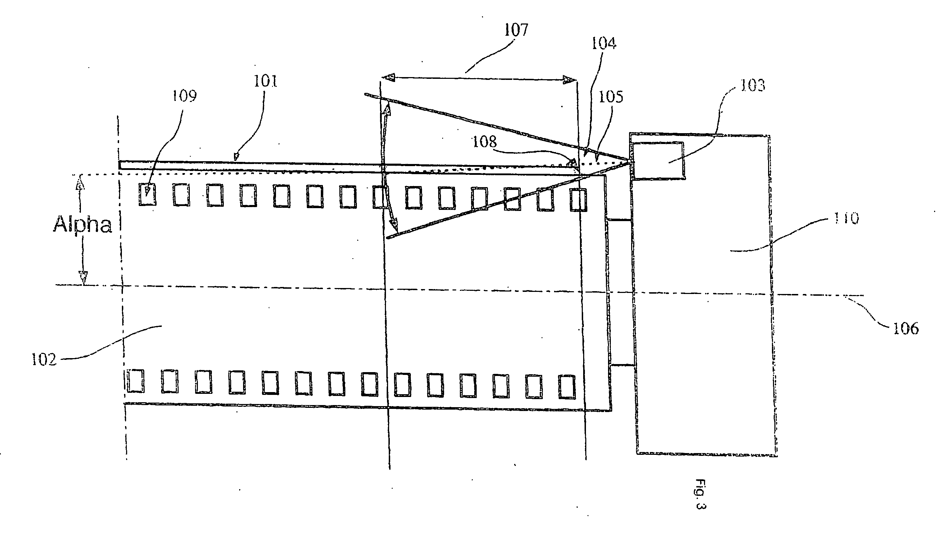

Bei der in Fig. 3 dargestellten Ausführungsform sind übereinstimmende Bauelemente mit um den Wert 100 erhöhten Bezugszeichen dargestellt. Im Unterschied zu der in Fig. 1 dargestellten Ausführungsform ist der Wellensender und Wellenempfänger bei der Ausführungsform gemäß Fig. 3 in den Lagerbock 110 der Umlenkrolle 102 integriert. Dadurch wird die Meßeinrichtung geschützt. Zugleich erlaubt ein solcher Einbau den Einfallswinkel ALPHA gering zu halten.

## Patentansprüche

1. Meßverfahren zur Bestimmung der Zugspannungsverteilung über der Bandbreite eines Bandes (1, 101) mittels einer Umlenkrolle (2, 102), die mehrere, in Längsrichtung der Umlenkrolle (2, 102) versetzt zueinander angeordnete Sensoren (9, 109) aufweist, welche die beim Umlenken des Bandes (1, 101) um die Umlenkrolle (2, 102) in Radialrichtung der Umlenkrolle (2, 102) wirkenden Kräfte messen, bei dem
- ein Band (1, 101) über die Umlenkrolle (2, 102) zur Bestimmung der Bandkantenlage des Bands (1, 101) geführt, und ein Wellensender (3, 103) und ein Wellenempfänger (3, 103) verwendet wird, wobei der Wellensender (3, 103) entweder so ausgerichtet ist, daß
- in seinem Wellenausbreitungswinkel (4, 104) ausgesendete Wellen auf die Umfangsfläche der Umlenkrolle (2, 102) treffen, und zwar in dem Bereich der Umfangsfläche der Umlenkrolle (2, 102), in der die Bandkante (8, 108) des von der Umlenkrolle (2, 102) umgelenkten Bands (1, 101) auf der Umfangsfläche aufliegt, oder so ausgerichtet ist, dass
- sich zumindest ein Teil der in seinem Wellenausbreitungswinkel (4, 104) ausgesendeten Wellen in dem Bereich der Umfangsfläche der Umlenkrolle (2, 102), in der die Bandkante (8, 108) des von der Umlenkrolle (2, 102) umgelenkten Bands (1, 101) auf der Umfangsfläche aufliegt, parallel zur Umfangsfläche der Umlenkrolle (2, 102) und in einem Abstand zur Umlenkrolle (2, 102), der maximal der Banddicke entspricht, ausbreiten,
- die Lage der Bandkante (8, 108) in Längsrichtung der Umlenkrolle (2, 102) aus dem von dem Wellenempfänger (3, 103) aufgenommenen Echo der von dem Wellensender (3, 103) ausgestrahlten Ultraschallwellen ermittelt wird,
- aus der so ermittelten Lage der Bandkante (8, 108) bestimmt wird, ob ein Sensor (9, 109) in Längsrichtung der Umlenkrolle (2, 102) gesehen nur teilweise durch das Band (1, 101) überdeckt ist, und
- der von einem nur teilweise überdeckten Sensor (9, 109) ermittelte Messwert korrigiert wird.

2. Meßverfahren nach Anspruch 1, wobei
- der Wellensender (3, 103) so ausgerichtet ist, daß sich zumindest ein Teil der in seinem Wellenausbreitungswinkel (4, 104) ausgesendeten Wellen in dem Bereich der Umfangsfläche der Umlenkrolle (2, 102), in der die Bandkante (8, 108) des von der Umlenkrolle (2, 102) umgelenkten Bands (1, 101) auf der Umfangsfläche aufliegt, parallel zur Umfangsfläche der Umlenkrolle (2, 102) und in einem Abstand zur Umlenkrolle (2, 102), der maximal der Banddicke entspricht, ausbreiten und
- der Wellensender (3, 103) derart ausgerichtet ist, daß die Mittelachse (5, 105) seines Wellenausbreitungswinkels (4, 104) in einer Ebene, die auch die Längsachse der Umlenkrolle (2, 102) enthält parallel zur Längsachse der Umlenkrolle (2, 102) verläuft.

3. Meßverfahren nach Anspruch 1, wobei
- der Wellensender (3, 103) so ausgerichtet ist, daß in seinem Wellenausbreitungswinkel (4, 104) ausgesendete Wellen auf die Umfangsfläche der Umlenkrolle (2, 102) treffen, und zwar in dem Bereich der Umfangsfläche der Umlenkrolle (2, 102), in der die Bandkante (8, 108) des von der Umlenkrolle (2, 102) umgelenkten Bands (1, 101) auf der Umfangsfläche aufliegt und
- der Wellensender (3, 103) derart ausgerichtet ist, daß die Mittelachse (5, 105) seines Wellenausbreitungswinkels (4, 104) in einer Ebene, die auch die Längsachse der Umlenkrolle (2, 102) enthält im Winkel ALPHA zur Längsachse der Umlenkrolle (2, 102) verläuft.

4. Meßverfahren nach Anspruch 2 oder 3, wobei der Wellensender (3, 103) derart ausgerichtet ist, daß die Mittelachse (5, 105) seines Wellenausbreitungswinkels (4, 104) in einer Ebene verläuft, die senkrecht zur Bandlaufrichtung verläuft.

5. Meßverfahren nach einem der Ansprüche 1 bis 4, wobei der Wellensender (3, 103) an dem Lagerbock (10, 110) der Umlenkrolle (2, 102) befestigt ist.

6. Meßverfahren nach einem der Ansprüche 1 bis 5, mit einer gemeinsamen Sende-Empfangseinheit (3, 103).

7. Meßverfahren nach einem der Ansprüche 1 bis 6, wobei der Wellensender (3, 103) Ultraschallwellen abstrahlt und in einer Entfernung von 10 bis 1000 mm zur zu erfassenden Bandkante (8, 108) angeordnet ist.

8. Meßverfahren nach einem der Ansprüche 1 bis 7, wobei der Wellensender (3, 103) Ultraschallwellen mit einer Frequenz von 100 bis 600 kHz abstrahlt.

## Claims

1. Measuring method for determining the tenslle stress distribution over the belt width of a belt (1, 101) by means of a deflection pulley (2, 102) which comprises a plurality of sensors (9, 109) arranged mutually offset In the longitudinal direction of the deflection pulley (2, 102) and which measure forces acting In the radial direction of the deflection pulley (2, 102) when the belt (1, 101) is deflected around the deflection pulley (2, 102), wherein
- a belt (1, 101) is guided over the deflection pulley (2, 102) to determine the edge position of the belt (1, 101) and a wave transmitter (3, 103) and a wave receiver (3, 103) are used, wherein the wave transmitter (3, 103) is oriented either such that
- waves emitted In its wave propagation angle (4, 104) strike the circumferential surface of the deflection pulley (2, 102) and, more precisely, in the region of the circumferential surface of the deflection pulley (2, 102) in which the belt edge (8, 108) of the belt (1, 101) deflected by the deflection pulley (2, 102) rests on the circumferential surface, or is oriented such that
- at least part some of the waves emitted In Its wave propagation angle (4, 104) in the region of the circumferential surface of the deflection pulley (2, 102), in which the belt edge (8, 108) of the belt deflected by the deflection pulley (2, 102) rests on the circumferential surface, propagate parallel to the circumferential surface of the deflection pulley (2, 102) and at a spacing from the deflection pulley (2, 102) which corresponds at most to the belt thickness,
- the position of the belt edge (8, 108) is determined in the longitudinal direction of the deflection pulley (2, 102) from the echo, captured by the wave receiver (3, 103), of the ultrasound waves emitted by the wave transmitter (3, 103),
- it is determined from the position of the belt edge (8, 108) thus determined whether a sensor (9, 109), viewed in the longitudinal direction of the deflection pulley (2, 102), is only partially covered by the belt (1, 101), and
- the measured value determined by a sensor (9, 108) which Is only partially covered is corrected.

2. Measuring method according to claim 1, wherein
- the wave transmitter (3, 103) is oriented in such a way that at least some of the waves emitted in its wave propagation angle (4, 104) in the region of the circumferential surface of the deflection pulley (2, 102), in which the belt edge (8, 108) of the belt (1, 101) deflected by the deflection pulley (2, 102) rests on the circumferential surface, propagate parallel to the circumferential surface of the deflection pulley (2, 102) and at a spacing from the deflection pulley (2, 102) which corresponds at most to the belt thickness and
- the wave transmitter (3, 103) is oriented in such a way that the central axis (5, 105) of its wave propagation angle (4, 104) runs in a plane which also contains the longitudinal axis of the deflection pulley (2, 102) parallel to the longitudinal axis of the deflection pulley (2, 102).

3. Measuring method according to claim 1, wherein
- the wave transmitter (3, 103) is oriented in such a way that waves emitted in its wave propagation angle (4, 104) strike the circumferential surface of the deflection pulley (2, 102) and, more precisely, in the region of the circumferential surface of the deflection pulley (2, 102) in which the belt edge (8, 108) of the belt (1, 101) deflected by the deflection pulley (2, 102) rests on the circumferential surface and
- the wave transmitter (3, 103) is oriented in such a way that the central axis (5, 105) of its wave propagation angle (4, 104) runs In a plane which also contains the longitudinal axis of the deflection pulley (2, 102) at an angle ALPHA to the longitudinal axis of the deflection pulley (2, 102).

4. Measuring method according to claim 2 or 3, wherein the wave transmitter (3, 103) is oriented in such a way that the central axis (5, 105) of Its wave propagation angle (4, 104) runs in a plane which runs perpendicular to the belt running direction.

5. Measuring method according to any one of claims 1 to 4, wherein the wave transmitter (3, 103) is secured to the bearing bracket (10, 110) of the deflection pulley (2, 102).

6. Measuring method according to any one of claims 1 to 5, having a shared transceiver unit (3, 103).

7. Measuring method according to any one of claims 1 to 6, wherein the wave transmitter (3, 103) emits ultrasound waves and is arranged at a distance of 10 to 1,000 mm from the belt edge (8, 108) to be detected.

8. Measuring method according to any one of claims 1 to 7, wherein the wave transmitter (3, 103) emits ultrasound waves at a frequency of 100 to 600 kHz.

## Revendications

1. Procédé de mesure pour déterminer la répartition des contraintes de traction sur la largeur de bande d'une bande (1, 101) au moyen d'une poulie de déviation (2, 102) qui présente plusieurs capteurs (9, 109) décalés les uns par rapport aux autres dans la direction longitudinale de la poulie de déviation (2, 102), lesquels mesurent les forces qui agissent dans la direction radiale de la poulie de déviation (2, 102) lors de la déviation de la bande (1, 101) autour de la poulie de déviation (2, 102), dans lequel
- une bande (1, 101) est guidée sur la poulie de déviation (2, 102) pour déterminer la position d'un bord de bande de la bande (1, 101) et un émetteur d'ondes (3, 103) et un récepteur d'ondes (3, 103) sont utilisés, l'émetteur d'ondes (3, 103) étant soit orienté de façon que
- des ondes émises dans son angle de propagation d'ondes (4, 104) rencontrent la surface périphérique de la poulie de déviation (2, 102), en particulier dans la zone de la surface périphérique de la poulie de déviation (2, 102) dans laquelle le bord de bande (8, 108) de la bande (1, 101) déviée par la poulie de déviation (2, 102) repose sur la surface périphérique, soit orienté de façon que
- au moins une partie des ondes émises dans son angle de propagation d'ondes (4, 104) se propagent, dans la zone de la surface périphérique de la poulie de déviation (2, 102) dans laquelle le bord de bande (8, 108) de la bande (1, 101) déviée par la poulie de déviation (2, 102) repose sur la surface périphérique, parallèlement à la surface périphérique de la poulie de déviation (2, 102) et à une distance de la poulie de déviation (2, 102) qui correspond au maximum à l'épaisseur de la bande,
- la position du bord de bande (8, 108) dans la direction longitudinale de la poulie de déviation (2, 102) est déterminée à partir de l'écho enregistré par le récepteur d'ondes (3, 103) des ondes ultrasonores émises par l'émetteur d'ondes (3, 103),
- à partir de la position du bord de bande (8, 108) ainsi déterminée, il est déterminé si, vu dans la direction longitudinale de la poulie de déviation (2, 102), un capteur (9, 109) est seulement partiellement recouvert par la bande (1, 101), et
- la valeur de mesure déterminée par un capteur (9, 109) seulement partiellement recouvert est corrigée.

2. Procédé de mesure selon la revendication 1, dans lequel
- l'émetteur d'ondes (3, 103) est orienté de façon qu'au moins une partie des ondes émises dans son angle de propagation d'ondes (4, 104) se propagent, dans la zone de la surface périphérique de la poulie de déviation (2, 102) dans laquelle le bord de bande (8, 108) de la bande (1, 101) déviée par la poulie de déviation (2, 102) repose sur la surface périphérique, parallèlement à la surface périphérique de la poulie de déviation (2, 102) et à une distance de la poulie de déviation (2, 102) qui correspond au maximum à l'épaisseur de la bande et
- l'émetteur d'ondes (3, 103) est orienté de façon que l'axe médian (5, 105) de son angle de propagation d'ondes (4, 104) s'étende dans un plan qui contient aussi l'axe longitudinal de la poulie de déviation (2, 102), parallèlement à l'axe longitudinal de la poulie de déviation (2, 102).

3. Procédé de mesure selon la revendication 1, dans lequel
- l'émetteur d'ondes (3, 103) est orienté de façon que des ondes émises dans son angle de propagation d'ondes (4, 104) rencontrent la surface périphérique de la poulie de déviation (2, 102), en particulier dans la zone de la surface périphérique de la poulie de déviation (2, 102) dans laquelle le bord de bande (8, 108) de la bande (1, 101) déviée par la poulie de déviation (2, 102) repose sur la surface périphérique et
- l'émetteur d'ondes (3, 103) est orienté de façon que l'axe médian (5, 105) de son angle de propagation d'ondes (4, 104) s'étende dans un plan qui contient aussi l'axe longitudinal de la poulie de déviation (2, 102), en faisant un angle ALPHA avec l'axe longitudinal de la poulie de déviation (2, 102).

4. Procédé de mesure selon la revendication 2 ou 3, dans lequel l'émetteur d'ondes (3, 103) est orienté de façon que l'axe médian (5, 105) de son angle de propagation d'ondes (4, 104) s'étende dans un plan qui s'étend perpendiculairement à la direction de défilement de la bande.

5. Procédé de mesure selon une des revendications 1 à 4, dans lequel l'émetteur d'ondes (3, 103) est fixé au support (10, 110) de la poulie de déviation (2, 102).

6. Procédé de mesure selon une des revendications 1 à 5, utilisant une unité d'émission/réception (3, 103) commune.

7. Procédé de mesure selon une des revendications 1 à 6, dans lequel l'émetteur d'ondes (3, 103) émet des ondes ultrasonores et est disposé à une distance de 10 à 1000 mm du bord de bande (8, 108) à détecter.

8. Procédé de mesure selon une des revendications 1 à 7, dans lequel l'émetteur d'ondes (3, 103) émet des ondes ultrasonores d'une fréquence de 100 à 600 kHz.
